# EUROPEAN PATENT SPECIFICATION

(11) **EP 0 568 382 B1**
(45) Date of publication and mention of the grant of the patent: **09.07.1997**
(21) Application number: 93303391.2
(22) Date of filing: 29.04.1993
(51) Int. Cl.: G02B 6/36, G02B 6/38, G02B 6/255

(54) **Optical fiber clamp**
Klemme für optische Faser
Elément de serrage à fibre optique

(30) Priority: 01.05.1992 JP 112500/92
(43) Date of publication of application: 03.11.1993
(73) Proprietor: SUMITOMO ELECTRIC INDUSTRIES, LTD, Osaka-shi, Osaka-fu 541 (JP)
(72) Inventor: Tokumaru, Yuzo, c/o Yokohama Works, Sakae-ku, Yokohama-shi, Kanagawa (JP); Yanagi, Toru, c/o Yokohama Works, Sakae-ku, Yokohama-shi, Kanagawa (JP)
(74) Representative: Carpenter, David

(56) References cited:
- EP-A- 0 324 272
- EP-A- 0 462 710
- DE-C- 4 123 227
- US-A- 4 750 804

## Description

The present invention relates to an optical fibre clamp for holding a batch of coated optical fibre tapes and, in particular, to an optical fibre clamp for adjusting axis of optical fibres with high accuracy, to fuse the optical fibres and connect all of the optical fibres to each other at once.

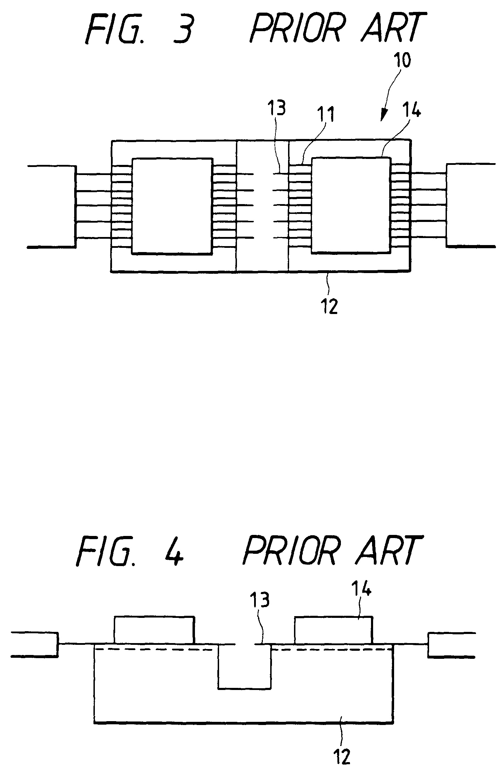

Conventional methods for fusing and connecting respective optical fibres of a coated optical fibre tape include first removing the coatings from the optical fibre. Thereafter, an optical fibre clamp 10 such as that shown in Figs. 3 and 4 is used.

The optical fibres 13 are arranged one by one into a plurality of V-shaped grooves 11 formed in the body 12. Thereafter, a clamp 14 is used to give a pressing force to the optical fibres 13 to hold them in place.

To fuse and connect multicore optical fibres all at once, it is necessary to perform a push/pull operation upon each optical fibre by use of the above-mentioned optical fibre clamp.

A surface of the optical fibre clamp coming in contact with the respective optical fibres 13 is made smooth so that the respective centres of the optical fibres 13 will not shift with respect to each other even when this push/pull operation is performed.

The optical fibre clamp 14 is made of heat-proof material which is durable against a discharge arc at the time of fusing. At the same time, the optical fibre clamp 14 is made of a hard material to maintain the position relationship between itself and the V-shaped grooves.

In the conventional methods discussed above, a problem arises that large displacement differences are often produced both between the axial alignment of optical fibres with respect to optical fibres opposite thereto and between the axial displacement of optical fibres with respect to optical fibres adjacent thereto. The large displacement differences occur because the outer diameters of the optical fibres themselves vary because of the dimensional irregularities in the optical fibres, and because the clamp itself is a rigid body.

When, for example, a plurality of optical fibres are to be connected at once, it is impossible to press all of the optical fibres into the V-shaped grooves uniformly under the same condition. In some cases, the maximum allowable axial displacements of the optical fibres may only be 6 µm. As a result, the problem arises that the loss of connection is not less than 0.2 dB.

EP 0462710 describes an optical fibre holder of this type, further including a coating intended to prevent or reduce scratching of the fibres.

US 4750804 discloses a jig for use in connecting optical fibres, the jig comprising a grooved base member which is pivotally connected to a clamp member. The clamp member is provided with a recess within which a cushion is provided, the cushion engaging the optical fibres, in use, to reduce axial movement thereof.

It is an object of the present invention to provide an optical fibre clamp from which respective axial displacements of optical fibres can be minimized when a multicore optical fibre is to be subjected to a batch fusion connection.

According to the present invention there is provided an optical fibre clamp comprising:
(a) a first clamp body having a surface with V-shaped grooves formed therein for holding individual coated optical fibres; and
(b) a second clamp body having an optical fibre contact surface facing said first body, said second clamp body including a cushion and a smooth film outer layer formed on said cushion, the outer layer coming into contact with said fibres when said first and second clamp bodies are brought toward one another, wherein said second clamp body is formed so as to have a recess, said cushion and said smooth film outer layer being disposed within said recess, and wherein said recess of said second clamp body has a plurality of projections opposite to said V-shaped grooves of said first clamp body.

Other objects, features and characteristics of the present invention, as well as the methods of operation and functions of the related elements of the structure, and the combination of parts and economies of manufacture, will become more apparent upon consideration of the following detailed description and the appended claims with reference to the accompanying drawings all of which form a part of this specification, wherein like reference numerals designate corresponding parts in the various figures.
Fig. 1 is a schematic diagram of an optical fibre clamp according to an embodiment of the present invention;
Fig. 2 is an enlarged diagram of a portion of Fig. 1; and
Figs. 3 and 4 are schematic diagrams of an optical fibre clamp according to the prior art.

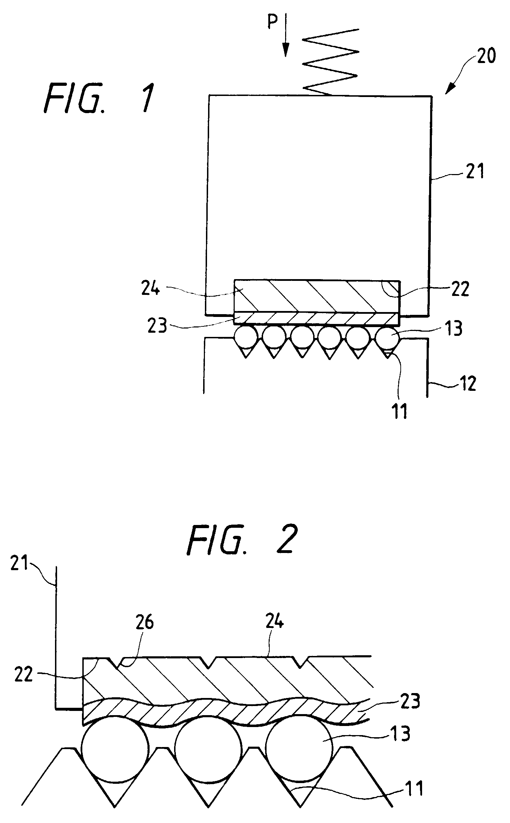

An optical fibre clamp with a cushion layer having an abrasion resistant smooth film layer is shown by way of example, in Figure 1. The optical fibre clamp 20 includes a concave portion 22 formed on the side of the optical fibre pressing surface of the clamp body 21. A cushion 24 having a smooth film layer 23 is provided on the side of the optical fibre contact surface in this concave portion 22.

Optical fibres 13 of a multicore fibre are inserted into respective V-shaped grooves 11 formed in a V-shaped grooved body 12. The optical fibres 13 are then pressed by use of a clamp body 21.

The cushion 24 serves to absorb the differences in the outer diameters and other dimensional peculiarities of the optical fibres 13. The cushion 24 may be formed of a foamed synthetic cushion material. In this embodiment, the thickness of the cushion 24 is set to be from 2 mm to 3 mm, and cushion tape, having bonding layers (not shown), is used on both sides of the cushion 24.

The film layer 23 is preferably made to have high degree of smoothness because it is brought into contact with the optical fibres 13. Further, it preferably has a heat resistance high enough to be durable against a discharge arc. In this embodiment, a Teflon film with a thickness of not more than 300 µm is used as the heat-proof smooth film layer 23.

After a plurality of optical fibres are inserted into the V-shaped grooves, the clamp 20, provided with a cushion 24, having an abrasion-resistant smooth film layer 23 on the side of its optical fibre pressing surface, is used to absorb the scattering of outer diameters and other dimensional peculiarities of the optical fibres through the cushion function of the cushion. The clamp, thus, applies a constant pressure to the optical fibres through the abrasion-resistant smooth film layer to thereby arrange and hold the optical fibres in the V-shaped grooves uniformly.

As a result, differences in the outer diameters and other dimensional peculiarities of the optical fibres 13 can be absorbed on the basis of the cushion effect of the cushion 24 as shown in Fig. 2. The highly smooth film layer 23 provides a necessary constant uniform force to the respective fibres 13. Accordingly, the optical fibres 13 can be arranged and held in the V-shaped grooves, such that the axial displacements of the respective optical fibres can be minimized to reduce the loss of connections when a multicore fibre is to be subjected to a batch fusion connection.

The embodiment described above shows that the concave portion 22 is formed in the optical fibre pressing surface of the clamp body 21. The cushion 24, having the abrasion-resistant film layer 23 on its surface, is provided in the concave portion 22.

As shown in Fig. 2, projection portions 26 which correspond to the V-shaped grooves 11, respectively, are provided in the concave portion 22 provided in the concave portion 22 provided in the clamp body 21. This arrangement permits the optical fibres 13 to be arranged in the V-shaped grooves 11 more uniformly.

In the optical fibre clamp according to the present invention, optical fibres are arranged and held in V-shaped grooves by means of a clamp provided with a cushion having an abrasion-resistant smooth film layer on its surface. With the clamp of the present invention not only is it possible to minimize the axial displacements of the respective fibres, but it is also possible to perform batch fusion on a multicore fibre with the minimum loss of connection. As a result, the optical fibre clamp according to the present invention can effectively hold optical fibres in a multicore optical fibre batch fusion and connection apparatus.

While the invention has been described in connection with what is presently considered to be the most practical and preferred embodiment, it is to be understood that the invention is not limited to the disclosed embodiment, but, on the contrary, is intended to cover various modifications and equivalent arrangements included within the scope of the appended claims.

## Claims

1. An optical fibre clamp comprising:
(a) a first clamp body (12) having a surface with V-shaped grooves (11) formed therein for holding individual coated optical fibres (13); and
(b) a second clamp body (21) having an optical fibre contact surface facing said first body (12), said second clamp body (21) including a cushion (24) and a smooth film outer layer (23) formed on said cushion (24), the outer layer (23) coming into contact with said fibres (13) when said first and second clamp bodies (12, 21) are brought toward one another, wherein said second clamp body (21) is formed so as to have a recess (22), said cushion (24) and said smooth film outer layer (23) being disposed within said recess (22), and wherein said recess (22) of said second clamp body (21) has a plurality of projections (26) opposite to said V-shaped grooves (11) of said first clamp body (12).

2. An optical fibre clamp as claimed in Claim 1, wherein the smooth film outer layer (23) is formed of an abrasion-resistant material.

## Patentansprüche

1. Lichtwellenleiter-Klammer, die folgende Komponenten umfaßt:
(a) einen ersten Klammerkörper (12), der eine Oberfläche mit V-förmigen Auskehlungen (11) hat, die in dieser gebildet werden, um einzelne Lichtwellenleiter mit Primärbeschichtung (13) aufzunehmen, und
(b) einen zweiten Klammerkörper (21), der eine Lichtwellenleiter-Kontaktfläche hat, die zu dem ersten Körper (12) hin zeigt, wobei der zweite Klammerkörper (21) einen Puffer (24) und eine glatte äußere Filmschicht (23) einschließt, die auf dem Puffer (24) gebildet wird, wobei die äußere Schicht (23) mit den Lichtwellenleitern (13) in Kontakt kommt, wenn der erste und der zweite Klammerkörper (12, 21) zueinander hin bewegt werden, bei welcher der zweite Klammerkörper (21) so geformt ist, daß er eine Aussparung (22) hat, wobei der Puffer (24) und die glatte äußere Filmschicht (23) innerhalb dieser Aussparung (22) angeordnet sind, und bei welcher die Aussparung (22) des zweiten Klammerkörpers (21) eine Vielzahl von Vorsprüngen (26) hat, die den V-förmigen Auskehlungen (11) des ersten Klammerkörpers (12) gegenüberliegen.

2. Lichtwellenleiter-Klammer nach Anspruch 1, bei der die glatte äußere Filmschicht (23) aus einem abriebbeständigen Material hergestellt wird.

## Revendications

1. Élément de serrage pour fibres optiques comprenant:
(a) un premier corps de serrage (12) ayant une surface comportant des rainures en V (11) qui y sont agencées pour retenir les fibres optiques individuelles enrobées (13); et
(b) un deuxième corps de serrage (21) ayant une surface de contact des fibres optiques faisant face audit premier corps (12), ledit deuxième corps de serrage (21) englobant un coussin (24) et une couche extérieure à film lisse (23) formée sur ledit coussin (24), la couche extérieure (23) contactant lesdites fibres (13) lorsque lesdits premier et deuxième corps de serrage (12, 21) sont rapprochés l'un de l'autre, ledit deuxième corps de serrage (21) étant agencé de sorte à comporter un évidement (22), ledit coussin (24) et ladite couche extérieure à film lisse (23) étant déposés à l'intérieur dudit évidement (22), ledit évidement (22) dudit deuxième corps de serrage (21) comportant plusieurs saillies (26) opposées auxdites rainures en V (11) dudit premier corps de serrage (12).

2. Élément de serrage pour fibres optiques selon la revendication 1, dans lequel la couche extérieure à film lisse (23) est composée d'un matériau résistant à l'abrasion.
